# EUROPEAN PATENT APPLICATION

(11) **EP 3 293 933 A1**
(43) Date of publication of application: **14.03.2018**
(21) Application number: 16187951.5
(22) Date of filing: 09.09.2016
(51) Int. Cl.: H04L 29/06, H04L 12/707

(54) **COMMUNICATION CONTENT PROTECTION**

(71) Applicant: Koninklijke KPN N.V., 2516 CK The Hague (NL)
(72) Inventor: van Steenbergen, Ate, 9737 NN Groningen (NL)
(74) Representative: Wuyts, Koenraad Maria

(57) **Abstract**

A method of transmitting data (D) from a first device (1) to a second device (2) may comprise:
- producing, at the first device (1), by using the data (D), at least a first data part (DP1) and a second data part (DP2),
- transmitting the first data part from the first device (1) to the second device (2) via a first intermediate device (3), a first network (7a) and a second intermediate device (4),
- transmitting the second data part from the first device (1) to the second device (2) via a second network (8), and
- reproducing, at the second device (2), the data (D) by using the first data part (DP1) and the second data part (DP2).

A first set (S1) of identifiers may be associated with the first device (1), a second set (S2) of identifiers with the second device (2), a third set (S3) of identifiers with the first intermediary device (3) and a fourth set (S4) of identifiers with the second intermediary device (4). The first data part (DP1) is transmitted using identifiers of the respective sets in succession.

## Description

### Field of the Invention

The present invention relates to communication content protection. More in particular, the present invention relates to methods of and devices for protecting content transmitted over communication networks.

### Background of the Invention

It is well known that content transmitted over data networks may be intercepted by eavesdroppers. Typical methods of content protection include encryption, thus making it impossible or at least difficult for eavesdroppers to understand the intercepted content. However, increasingly powerful computers make it possible to sometimes decrypt messages without using a key in a reasonable amount of time.

United States Patent US 8 600 050 discloses a method of data protection which uses both encryption and data separation. By splitting up the data to be transmitted into two subsets, one of which is encrypted, and by transmitting the subsets via different networks, it is more difficult to utilize any intercepted data as it is necessary to intercept both subsets. However, eavesdroppers specifically targeting the communication between two parties may still be able to intercept and combine the subsets, and thus to obtain the data.

### Summary of the Invention

It is an object of the present invention to improve the protection of transmitted data by providing a method of transmitting data between two devices which makes it significantly harder for an eavesdropper to target the communication between two parties and thus to obtain communicated content.

Accordingly, the invention provides a method of transmitting data from a first device to a second device, which method may include:
- producing, at the first device, by using the data, at least a first data part and a second data part,
- transmitting the first data part from the first device to the second device via a first intermediate device, a first network and a second intermediate device,
- transmitting the second data part from the first device to the second device via a second network, and
- reproducing, at the second device, the data by using the first data part and the second data part,
wherein a first set of identifiers is associated with the first device, a second set of identifiers is associated with the second device, a third set of identifiers is associated with the first intermediary device and a fourth set of identifiers is associated with the second intermediary device, and
wherein transmitting the first data part from the first device to the second device may include:
- the first device transmitting the first data part with a first identifier of the first set as origin identifier and a first identifier of the third set as destination identifier,
- the first intermediate device forwarding the first data part with a second identifier of the third set as origin identifier and a first identifier of the fourth set as destination identifier,
- the second intermediate device forwarding the first data part with a second identifier of the fourth set as origin identifier and a first identifier of the second set as destination identifier, and
- the second device receiving the first data part with the second identifier of the fourth set as origin identifier and the first identifier of the second set as destination identifier.

According to the invention, therefore, at the first device at least a first data part and a second data part may be produced from the data. In some embodiments, this may include splitting the data, for example by assigning every odd bit (or every odd byte) to the first data part and every even bit (or every even byte) to the second data part. However, other methods of producing first and second data parts may also be used. It is noted that in some embodiments, more than two data parts may be used, such as three or four data parts, which together may allow to reproduce the original data, and which may be transmitted via more than two networks or paths.

The first data part and the second data part may be transmitted via separate networks, via separate paths or at least via separate logical and/or physical channels, and may only be combined at the second device. In addition, the first data part may be transmitted from the first device to the second device via a first intermediate device, a first network and a second intermediate device. That is, the first data part may be transmitted via intermediate devices, instead of directly from the first device to the second device without any intervening devices.

To direct data from one device to another device, identifiers may be associated with the devices to indicate the source and destination of the data. Such identifiers may be used to route data through a network. A set of identifiers may be associated with each device, and each set may include a source identifier and a destination identifier, although some sets may include only a single identifier. In some sets, the source identifier may be identical to the destination identifier.

By using intermediate devices which may have their own identifiers, the transmission of the first data part through the first network may have a source identifier of the first intermediate device (the source identifier as seen from the network) and a destination identifier of the second intermediate device (the destination identifier as seen from the network). As these identifiers may be different from the identifiers of the first device and the second device, the real source and destination identifiers of the data may be kept hidden from any eavesdroppers. This makes it significantly harder for an eavesdropper to combine the first and second data parts, as there may be very many data and/or data parts passing through a network. This may in particular be true when the corresponding data parts are chosen in such a way that there is no detectable correlation between them, such that any relationship between the data parts cannot be deduced from their contents.

In an embodiment, transmitting the second data part from the first device to the second device may comprises transmitting the second data part via a third intermediate device through the second network to a fourth intermediate device, wherein a fifth set of identifiers is associated with the third intermediary device and a sixth set of identifiers is associated with the fourth intermediary device, and wherein transmitting the second data part from the first device to the second device may comprise:
- the first device transmitting the second data part with a first identifier of the first set as origin identifier and a first identifier of the fifth set as destination identifier,
- the third intermediate device forwarding the second data part with a second identifier of the fifth set as origin identifier and a first identifier of the sixth set as destination identifier,
- the fourth intermediate device forwarding the second data part with a second identifier of the sixth set as origin identifier and a first identifier of the second set as destination identifier, and
- the second device receiving the second data part with the second identifier of the sixth set as origin identifier and the first identifier of the second set as destination identifier.

By transmitting the second data part also via intermediate devices which may have their own, distinct identifiers, an additional protection against eavesdropping may be obtained. However, in some embodiments the second data part may not be transmitted via intermediate devices but directly from the first device to the second device, and may involve an intermediate network only.

It is noted that when transmitting the second data part with a first identifier of the first set as origin identifier, the first identifier may be identical to the first identifier used for transmitting the first data part. However, in some embodiments the first identifier used for transmitting the second data part may be different from the first identifier used for transmitting the first data part.

When the second data part is also transmitted via intermediate devices, the first network and a second network may be constituted by a single network, and thus may be the same network. That is, the first network and the second network may be identical, or may both be parts of a larger network. The additional protection provided by using the third intermediate device and the fourth intermediate device and their associated identifiers may be sufficient to allow only a single network to be used for transmitting the data parts.

In other embodiments, in particular in embodiments in which the third intermediate device and the fourth intermediate device are absent, the first network and the second network may be two distinct networks which may have no physical connections. However, in other embodiments in which the third intermediate device and the fourth intermediate device are absent, the first network and the second network may be separate parts of a larger network, in which case measures may be taken to ensure that the first data part and the second data part are transmitted via (for example logically and/or physically) separate parts of the larger network.

The identifiers associated with the intermediate devices may be exchanged prior to transmitting the data parts. In particular, the identifiers may be exchanged using a separate, protected session which may involve encryption of the identifiers.

The first network and a second network may be distinct networks. In some embodiments, however, the first network and the second network may be constituted by different physical or logical channels of the same network. At least one of the networks may include the internet. The first network and the second network may operate according to different protocols. The data may include a data stream.

In some embodiments, the first data part and the second data part may be uncorrelated. This may depend on the manner in which the first data part and the second data part are produced. It may alternatively, or additionally, be achieved by decorrelating the data parts after they have been produced. Decorrelation may be carried out using techniques known in the field.

Producing, by using the data, at least a first data part and a second data part may include at least one of:
- allocating alternate groups of bits to the first data part and the second data part,
- determining a frequency spectrum of the data and allocating the real part and the imaginary part of the spectrum to the first data part and the second data part respectively,
- decorrelating the first data part and the second data part, and/or
- encrypting the data and/or the first data part and/or the second data part.

The invention also provides a method for a first device to transmit data to a second device, which method may include:
- producing, by using the data, at least a first data part and a second data part, which data parts are distinct,
- transmitting the first data part via a first route including a first intermediate device, a first network and a second intermediate device,
- transmitting the second data part via a second route,
wherein the first data part and the second data part are adapted to allow the second device to reproduce the data, wherein a first set of identifiers is associated with the first device, a second set of identifiers is associated with the second device, and a third set of identifiers is associated with the first intermediary device, and wherein the first device transmits the first data part with a first identifier of the first set as origin identifier and a first identifier of the third set as destination identifier. Each route may include a network.

The invention further provides a method for a second device to receive data from a first device, which method may include:
- receiving a first data part via a first route including a second intermediate device,
- receiving a second data part via a second route,
- reproducing, at the second device, the data by using the first data part and the second data part,
wherein the first data part and the second data part are adapted to allow the second device to reproduce the data, wherein a first set of identifiers is associated with the first device, a second set of identifiers is associated with the second device, and a fourth set of identifiers is associated with the second intermediary device, and wherein the second device receives the first data part with a first identifier of the fourth set as origin identifier and a first identifier of the second set as destination identifier.

The invention additionally provides a computer program product which may include instructions allowing a processor to carry out one or more of the methods described above. The software program product may be stored on a tangible carrier, such as a DVD or a USB stick. Alternatively, the software program product may be stored on a server from which it may be downloaded using the Internet. The software program product may contain software instructions which can be carried out by the processor of a device, such as a server, a user device (for example a smartphone), and/or a monitoring device.

A first device for transmitting data to a second device may include:
- a partitioning unit adapted for producing, from the data, at least a first data part and a second data part,
- a first transmission unit adapted for transmitting the first data part to a first network via a first intermediate device, and
- a second transmission unit adapted for transmitting the second data part to a second network,
wherein the partitioning unit is adapted for producing distinct data parts which allow the second device to reproduce the data. The first device may further include at least one encryption unit adapted to encrypt the first data part and/or the second data part. The data parts allowing the second device to reproduce the data may imply that the first data part and the second data part are adapted to allow the second device to reproduce the data.

A second device adapted for receiving data as data parts from a first device may include:
- a first receiving unit adapted for receiving a first data part via a first network,
- a second receiving unit adapted for receiving a second data part via a second network, and
- a reproduction unit adapted for reproducing the data from the first data part and the second data part.

The invention yet further provides a system for transmitting data, which system may include:
- a first network and a second network,
- a first device adapted to transmit the data,
- a second device adapted to receive the data,
- a first intermediate device adapted to forward data, and
- a second intermediate device adapted to forward data,
which system is adapted for carrying out the method defined above. More in particular, the system adapted for transmitting data may include:
- a first network and a second network,
- a first device adapted to transmit the data,
- a second device adapted to receive the data,
- a first intermediate device adapted to forward data, and
- a second intermediate device adapted to forward data,
   wherein the first device is adapted for
   o producing, by using the data, at least a first data part and a second data part, which data parts are distinct,
   o transmitting the first data part from the first device to the second device via a first intermediate device, a first network and a second intermediate device, and
   o transmitting the second data part from the first device to the second device via a second network,
      wherein the second device is adapted for reproducing the data by using the first data part and the second data part, wherein a first set of identifiers is associated with the first device, a second set of identifiers is associated with the second device, a third set of identifiers is associated with the first intermediary device and a fourth set of identifiers is associated with the second intermediary device, and wherein:
      - the first device is adapted for transmitting the first data part with a first identifier of the first set as origin identifier and a first identifier of the third set as destination identifier,
      - the first intermediate device is adapted for forwarding the first data part with a second identifier of the third set as origin identifier and a first identifier of the fourth set (S4) as destination identifier,
      - the second intermediate device is adapted for forwarding the first data part with a second identifier of the fourth set as origin identifier and a first identifier of the second set as destination identifier, and
      - the second device is adapted for receiving the first data part with the second identifier of the fourth set as origin identifier and the first identifier of the second set as destination identifier.

### Brief description of the drawings

The present invention will further be explained with reference to exemplary embodiments illustrated in the drawings, in which:
Fig. 1a schematically shows a first embodiment of a system for transmitting data in accordance with the present invention.
Fig. 1b schematically shows a second embodiment of a system for transmitting data in accordance with the present invention.
Fig. 1c schematically shows a third embodiment of a system for transmitting data in accordance with the present invention.
Fig. 2 schematically shows an exemplary embodiment of a first device in accordance with the present invention.
Fig. 3 schematically shows an exemplary embodiment of a second device in accordance with the present invention.
Fig. 4 schematically shows an exemplary embodiment of a method in accordance with the present invention.
Fig. 5 schematically shows an exemplary embodiment of a computer program product in accordance with the present invention.
Fig. 6 is a schematic block diagram of a general system to be employed in the disclosed method.

### Detailed description of embodiments

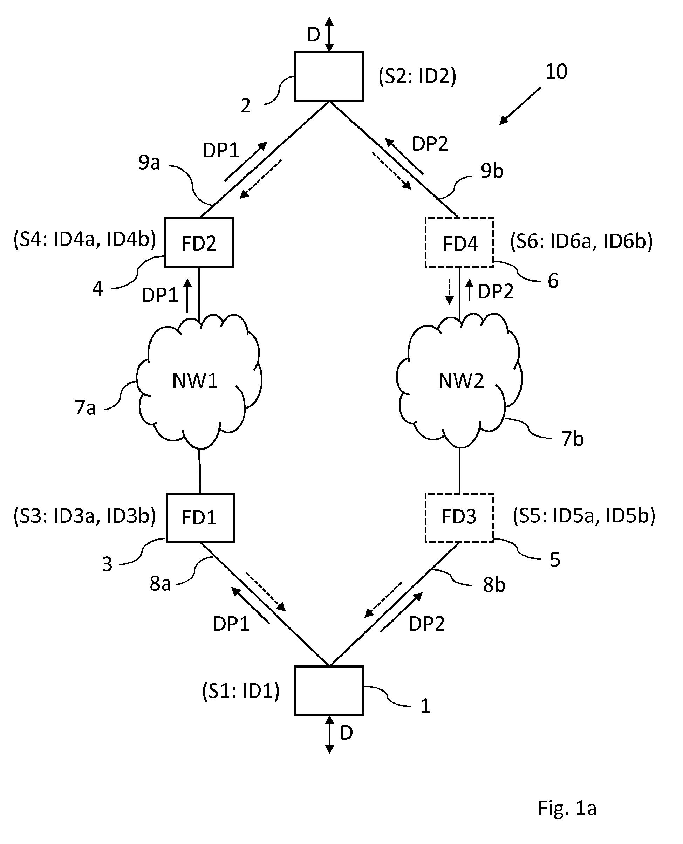

The embodiment of the system 10 schematically illustrated in Fig. 1a may include a first device 1, a second device 2, a first intermediate device 3, a second intermediate device 4, an (optional) third intermediate device 5, an (optional) fourth intermediate device 6, a first network (NW1) 7a and a second network (NW2) 7b. The system 10 may further include a first connection 8a, a second connection 9a, a third connection 8b and a fourth connection 9b.

The first device 1 and/or the second device 2 may include a server and/or a handheld consumer device, such as a smartphone or a laptop computer. Content, represented by data D, may be sent from the first device 1 to the second device 2, and vice versa. The content may include speech, images, data records, and/or other content. The data D may include a data stream. Additionally, or alternatively, the data D may include a time dependent signal. In the following, it will be assumed that the data D may represent content and may be sent from the first device 1 to the second device 2.

In the embodiment shown, the first device 1 may use the data D to produce at least a first data part DP1 and a second data part DP2 (in the present example it will be assumed that only two data parts are produced, although three or more data parts may be produced in accordance with the invention). The data parts DP1 and DP2 may be produced by splitting the data, for example by assigning alternate bits, bytes or byte clusters to the first data part and the second data part respectively. Alternatively, or additionally, other methods of producing the data parts may be used, for example by Fourier transforming the data (assuming the data have a suitable structure) and then assigning the real part of the resulting spectrum to the first data part DP1 and the imaginary part of the spectrum to the second data part DP2. Those skilled in the art will be aware of alternative methods of producing at least two data parts which together allow the original data to be reconstructed. A decorrelation operation may be applied to the data parts to minimize their mutual correlation, thus making it more difficult for eavesdroppers to detect any relationship between the data parts. One data part or both data parts may be encrypted prior to transmission. It is noted that encryption may alternatively, or additionally, carried out in the first intermediate device 3, and/or in the third intermediate device 5, if present.

The first device 1 transmits the first data part DP1 to the first intermediate device 3 via a wired or wireless data connection 8a. This data connection 8a may be or may not be an end-to-end connection, and may be flexible. A suitable data transmission protocol may be controlled by the first device 1, the first intermediate device 3, or a separate control entity (not shown). The first intermediate device 3 may include a server and/or an portable consumer device, such as a smartphone. As the first intermediate device 3 is, in the system 10, primarily used for forwarding the first data part, it may also be referred to as forwarding device 1 (FD1). Similarly, the second intermediate device 4 may be referred to as forwarding device 2 (FD2).

To route any data, which may include the first and second data parts, through the system 10, the devices 1 and 2 and the intermediate devices 3 and 4 (and, optionally, 5 and 6) each have an associated set of identifiers. In the example of Fig. 1a, the first device 1 may have a first set S1 which may include a single identifier ID1, the second device 2 may have a second set S2 which may include a single identifier ID2, the first intermediate device 3 may have a third set S3 which may include a pair of identifiers ID3a and ID3b, the second intermediate device 4 may have a fourth set S4 which may include a pair of identifiers ID4a and ID4b, the optional third intermediate device 5 may have a fifth set S5 which may include a pair of identifiers ID5a and ID5b, and the optional sixth intermediate device 6 may have a sixth set S6 which may include a pair of identifiers ID6a and ID6b.

The identifiers of a set, for example the identifiers ID3a and ID3b of the third set S3, may be different but may, in other embodiments, be identical. When the first network 7a and the first connection 8a use different communication protocols, such as 4G and Internet Protocol, for example, the identifiers ID3a and ID3b may be different.

The first network 7a may be a suitable communication network, such as a LAN (Local Area Network), a WAN (a Wide Area Network), a dedicated telephony network, and may also include the internet. The second intermediate device 4 then transmits the first data part DP1 to the second device 2, using the identifier ID2 of the second device 2.

The transmission of the first data part DP1 from the first device 1 to the first intermediate device 3 via the first connection 8a may involve the first identifier ID1 of the first set S1 as source identifiers, thus identifying the first device 1 as the source of the first data part DP1, and may further involve the identifier ID3a of the third set S3 as destination identifier, thus identifying the first intermediate device 3 as the destination of the first data part DP1 for the transmission over the connection 8a.

Similarly, the transmission of the first data part DP1 from the first intermediate device 3 to the second intermediate device 4 via the first network 7a may involve the identifier ID3b of the third set S3 and the identifier ID4b of the fourth set S4. It is noted that the first intermediate device 3 may use the identifier ID3a for reception (from the first device 1) and may use the identifier ID3b for transmission (to the second intermediate device 4), where ID3a and ID3b may be different.

The transmission of the first data part DP1 through the first network 7a may involve the identifier ID3b (associated with the first intermediate device 3, and acting as source identifier) and the identifier ID4a (associated with the second intermediate device 4, and acting as destination identifier). It is noted that for the transmission of the first data part DP1 through the first network 7a, the identifiers ID3b and ID4a may be used, and that therefore the identifiers ID1 and ID2 may not be used. Since the identifiers ID1 and ID2 may not be used during the transmission through the network 7a, any eavesdroppers intercepting DP1 cannot learn the original source (the first device 1) and the final destination (the second device 2), as their identifiers are not transmitted through the first network 7a. Because of this, it is much more difficult to intercept and interpret the relevant data, in particular since part of the relevant data (the second data part 2) is transmitted via the second network 7b.

It is further noted that the intermediate devices 3 and 4 (and also 5 and 6, when present) may be said to substitute one identifier (for example ID3b) for another identifier (for example ID1). This substitution may allow the original source identifier and final destination identifier to remain hidden.

Similarly, the second data part DP2 may be transmitted from the first device 1 to the third intermediate device 5 via the connection 8b, and from the intermediate device 5 via the second network 7b and the fourth intermediate device 6 to the second device 2. This transmission may involve the first set S1, the fifth set S5, the sixth set S6 and the second set S2.

It is noted that the third intermediate device 5 and the fourth intermediate device 6 may be omitted (or be integrated in the first device 1 and the second device 2 respectively), and that the second data part DP2 may be transmitted from the first device 1 via the second network 7b to the second device 2, without any intervening devices. The second network (NW2) 7b may include the internet, for example.

Once the second device 2 has received both (or all) data parts (DP1, DP2), it may use the received data parts to reproduce the original data D. The reproduced data D' may be identical to the original data D, but in some embodiments the reproduced data D' may not be identical, for example when lossy data compression has been used.

It can be seen that by using intermediate devices having associated (sets of) identifiers, the true source and destination of the data parts can be obscured, at least for part of the data trajectory. Intermediate devices having associated identifiers may be used for only one data part or for both (or all) data parts. That is, the system 10 of Fig. 1a may include only the first intermediate device 3 and the second intermediate device 4, but in some embodiments the system 10 may additionally include the third intermediate device 5 and the fourth intermediate device 6.

In some embodiments, at least one of the intermediate devices may be constituted by a software application running on either the first or the second device. That is, in such embodiments the first and/or second device may have at least two active software applications, one providing communication (transmission and/or reception) for the device itself and the other one providing communication (transmission and/or reception) as an intermediate device, the at least two software applications using distinct identifiers (for example ID1 and ID3). A suitable software application may include a virtual server (or in general: a virtual machine) or a so-called Docker application.

A suitable network, such as the networks 7a and 7b, may include an Ethernet network, a Wi-Fi network, a GSM network, a 4G or 5G mobile data network, an NFC (Near Field Communication) network, etc..

Suitable identifiers may be used for a particular protocol used. For internet protocols, for example, an e-mail address may be used for SMTP (Simple Mail Transfer Protocol), a SIP (Session Initiation Protocol) address for VoIP (Voice over Internet Protocol), a URL (Uniform Resource Locator) for HTTP (Hypertext Transfer Protocol), etc..

As mentioned above, data D may be sent from the first device 1 to the second device 2, and vice versa. The data D need not originate from the first device 1 or the second device 2, but instead may be transmitted to the first device 1 or the second device 2 from another device (not shown in Fig. 1a). For example, the data D may be sent from a first smartphone to the first device 1, and may after receipt by the second device 2 be forwarded to a second smartphone. A network operator may offer a service including transmission from a first smartphone (or other consumer device, such as a laptop computer or tablet computer) through the system 10 to a second smartphone (or other consumer device).

The first device 1 and the second device 2 may be trusted devices. The first network 7a and the second network 7b may be untrusted networks where the interception of data ("eavesdropping") may be possible. The intermediate devices may or may not be trusted devices. If the first device 1 and the second device 2 are trusted devices, producing the first data part DP1 and the second data part DP2 may be carried out in a trusted environment.

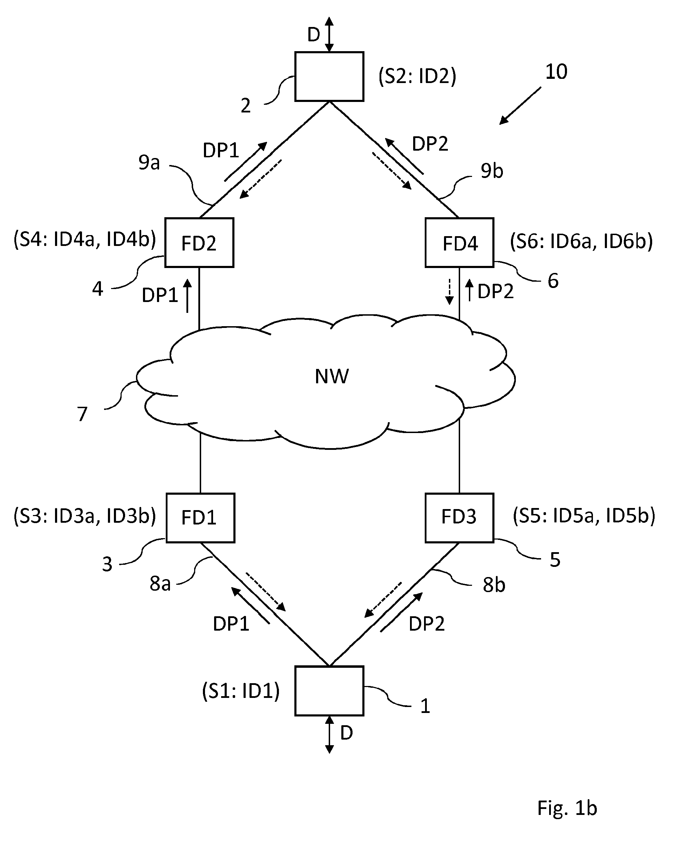

The embodiment of the system 10 schematically illustrated in Fig. 1b may include a first device 1, a second device 2, a first intermediate device 3, a second intermediate device 4, a third intermediate device 5, a fourth intermediate device 6, a first network 7a and a second network 7b. In this embodiment, the first network 7a and a second network 7b may both be constituted by a single common network (NW) 7.

When using a single network, instead of two (or more) separate networks, measures may be taken to make it difficult or even impossible to correlate the first data part DP1 with the second data part DP2. For example, in the case of mobile (cellular) networks, measures may be taken to avoid using the same cell or the same antenna for both data parts. Additionally, or alternatively, the third intermediate device 5 and the fourth intermediate device 6 may be used to hide the first identifier ID1 of the first device 1 and the second identifier ID2 of the second device 2 from the common network. Measures to avoid correlating the first data part DP1 with the second data part DP2 may include a transition from the internet to telephony within the system 10. Such a transition may be carried out in the first intermediate device 3, for example, or even within the first network 7a and/or the second network 7b.

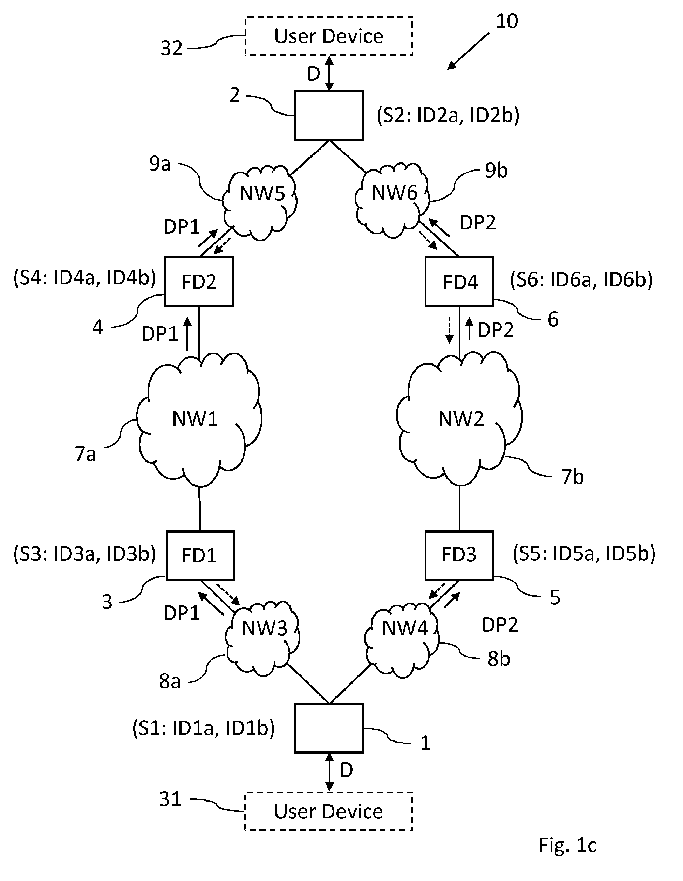

The embodiment of the system 10 schematically illustrated in Fig. 1c may include a first device 1, a second device 2, a first intermediate device 3, a second intermediate device 4, a third intermediate device 5, a fourth intermediate device 6, a first network 7a and a second network 7b. In this embodiment, the first network 7a and a second network 7b may be constituted by separate networks first network (NW1) 7a and second network (NW2) 7b.

In this embodiment, the connection 8a between the first device 1 and the first intermediate device 3 may include a third network (NW3), while the connection 8b between the first device 1 and the third intermediate device 5may include a fourth network (NW4). Similarly, the connection 9a between the second intermediate device 4 and the second device 2 may include a fifth network (NW5), while the connection 9b between the fourth intermediate device 6 and the second device 2 may include a sixth network (NW6). Some or all of the networks may be different from each other. Some networks may include the Internet, while other networks may include a LAN (Local Area Network) and/or a 4G or 5G mobile network.

Also shown in Fig. 1c are two optional user devices: a first user device 31 and a second user device 32. The first user device 31 may be arranged for exchanging data D with the first device 1, possibly via a wireless connection, while the second user device 32 may be arranged for exchanging data D with the second device 2. At least one of the user devices 31 and 32 may be a smartphone, a tablet device or a laptop computer, for example.

The embodiment of Fig. 1c may function as the embodiments of Figs. 1a and 1b, and may offer the same advantages.

As can be seen from Fig. 1c, transmitting data may be offered as a service to the users to the user devices 31 and 32. The invention allows data to be securely transmitted from the first user device 31 to the second user device 32.

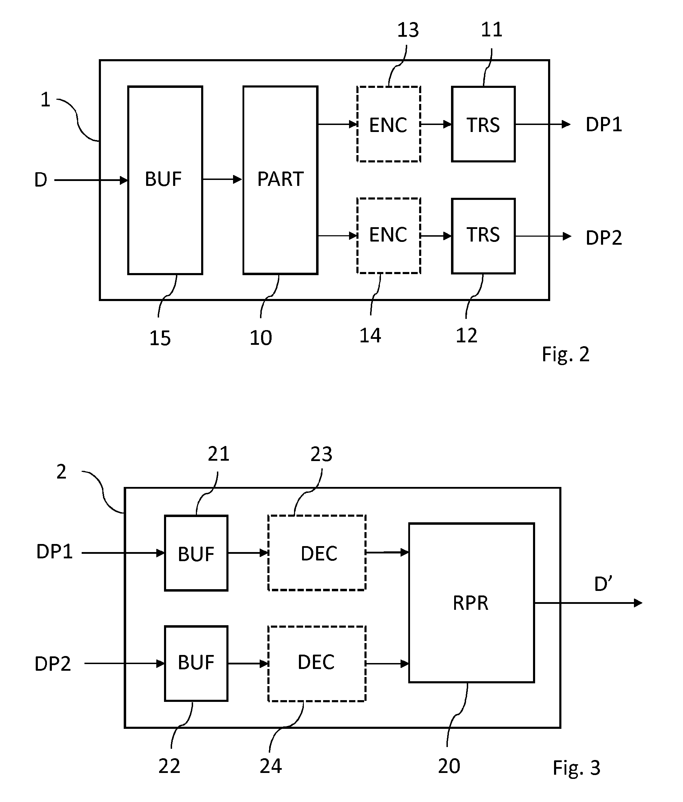

An exemplary embodiment of a (first) device 1 adapted for transmitting data to a second device 2 according to the invention is schematically illustrated in Fig. 2. The first device 1 as illustrated in Fig. 2 may include a partitioning unit 10 adapted for producing, from the data D, at least a first data part DP1 and a second data part DP2, a first transmission (TRS) unit 11 adapted for transmitting the first data part DP1 to a first network (7a in Fig. 1) via a first intermediate device (3 in Fig. 1), and a second transmission unit 12 adapted for transmitting the second data part DP2 to a second network (7b in Fig. 1). The embodiment shown further includes a buffer (BUF) unit 15 adapted for buffering the data D.

The partitioning unit 10, which may include a suitable processor which may in turn be provided with an associated memory, may be adapted for producing distinct data parts DP1, DP2, ... which allow the second device (2 in Fig. 1) to reproduce the original data D from which the data parts are derived. As mentioned above, the partitioning unit 10 may use one or more methods to partition the data D, for example allocating alternate bytes (or byte clusters) to the two data parts. In the embodiment shown, two data parts DP1 and DP2 are produced, but in other embodiments three, four or more data parts may be produced.

The device 1 may further include a first encryption unit 13 adapted to encrypt the first data part DP1 and/or a second encryption unit 14 adapted to encrypt the second data part DP2. These encryption units 13 and 14 are optional, as the invention may also be utilized without encryption. The transmission units (TRS) 11 and 12 may include a web application, an FTP (File Transfer Protocol) application, an SMTP (Simple Mail Transfer Protocol) server and/or a GSM (Groupe Spéciale Mobile) application. The transmission units 11 and 12 may include, or may be constituted by, respective output interfaces: a first output interface 11 and a second output interface 12.

An exemplary embodiment of a (second) device 2 according to the invention is schematically illustrated in Fig. 3. The second device 2 adapted for receiving data as data parts DP1, DP2 from a first device (1 in Fig. 1) may include a first receiving unit 21 adapted for receiving the first data part DP1, for example via a first network (7a in Fig. 1), and a second receiving unit 22 adapted for receiving the second data part DP2, for example via a second network (7b in Fig. 1). In the embodiment shown, the receiving units 21 and 22 are constituted by buffers (BUF).

The device 2 may further include a reproduction (RPR) unit 20 adapted for reproducing the data from the first data part DP1 and the second data part DP2 and for outputting the reproduced data D'. It is noted that the reproduced data D' may be identical to the original data D, but that in some embodiments the reproduced data D' need not be identical to the original data D and that for example a quality loss may be acceptable.

The device 2 may further include a first decryption (DEC) unit 23 and a second decryption unit 24 adapted for decrypting encrypted data parts.

It is noted that the embodiments of the devices 1 and 2 illustrated in Figs. 2 and 3 are unidirectional: the devices shown are adapted to transmit the data parts and to receive the data parts respectively. In other embodiments, the devices 1 and 2 may be bidirectional. An embodiment of a bidirectional first device 1 or second device 2 may be obtained by combining device 1 of Fig. 2 and device 2 of Fig. 3 in a single housing.

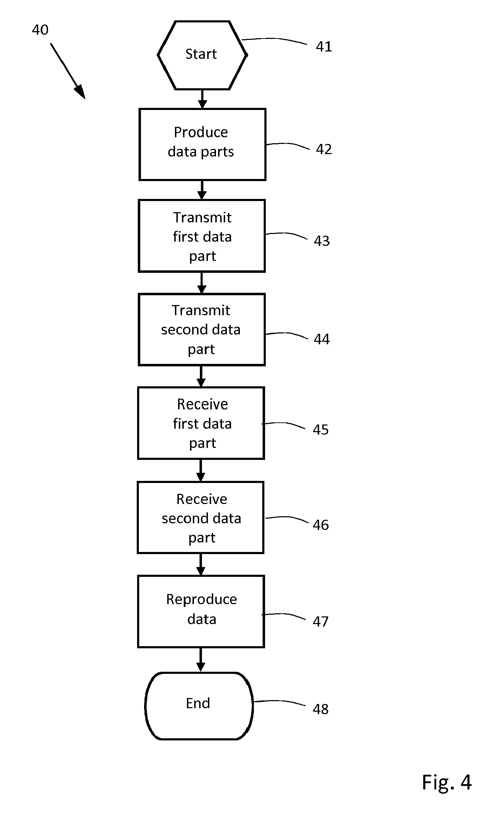

An exemplary embodiment of a method according to the invention is schematically illustrated in Fig. 4. The method 40 starts at action 41 and may further include:
- action 42: producing, at the first device (1 in Fig. 1), by using the data D, at least a first data part DP1 and a second data part DP2,
- action 43: transmitting the first data part from the first device to the second device (2 in Fig. 1) via a first intermediate device (3 in Fig. 1), the first network (7a in Fig. 1) and the second intermediate device (4 in Fig. 1), using identifiers associated with the intermediate devices,
- action 44: transmitting the second data part from the first device to the second device 2 via the second network (7b in Fig. 1),
- action 45: receiving the first data part DP1 at the second device,
- action 46: receiving the second data part DP2 at the second device,
- action 47: reproducing, at the second device, the data D by using the first data part DP1 and the second data part DP2.
It is noted that actions 43 and 44 may take place substantially simultaneously, and that the actions 45 and 46 may also take place substantially simultaneously. The method ends at action 46. In some embodiments, the method 40 may, after action 47 or after action 43, jump back to action 42 if more data are to be transmitted.

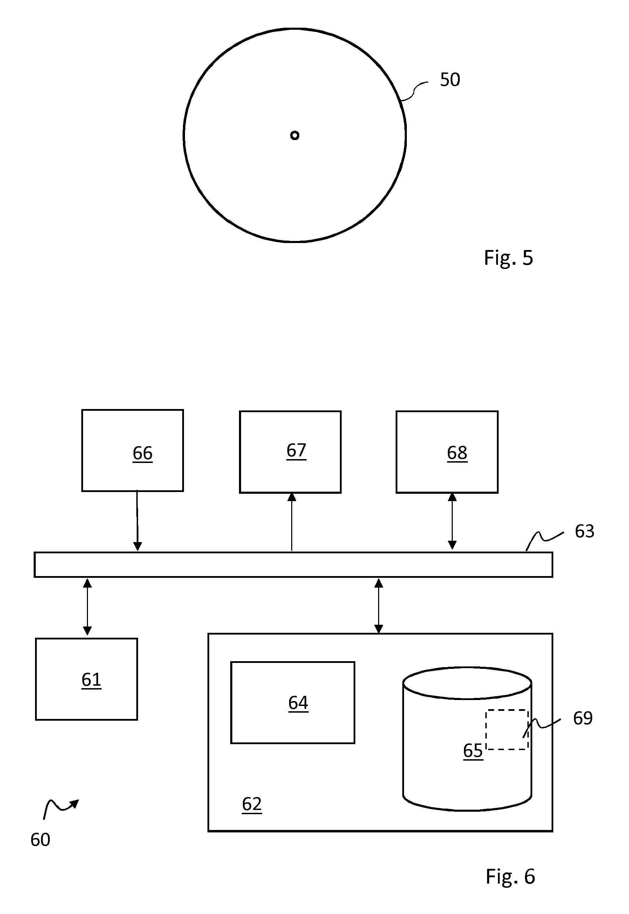

An exemplary embodiment of a computer program product according to the invention is schematically illustrated in Fig. 5. The computer program product 50 may include a tangible data carrier, such as a DVD, on which processor instructions are stored.

As will be appreciated by one skilled in the art, aspects of the present invention may be embodied as a system, method or computer program product. Accordingly, aspects of the present invention may take the form of an entirely hardware embodiment, a software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, for example, stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a solid-state drive, a random access memory (RAM), a non-volatile memory device, a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this disclosure, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless (using electromagnetic and/or optical radiation), wired, optical fibre, cable, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which may include one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the functions noted in the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is noted that the invention relates to all possible combinations of features recited in the claims.

FIG. 6 is a block diagram illustrating an exemplary data processing system that may be used as a part of a user equipment or as a network node, such as base station.

Data processing system 60 may include at least one processor 61 coupled to memory elements 62 through a system bus 63. As such, the data processing system 60 may store program code within memory elements 62. Further, processor 61 may execute the program code accessed from memory elements 62 via system bus 63. In one aspect, data processing system 60 may be implemented as a computer that is suitable for storing and/or executing program code. It should be appreciated, however, that data processing system 60 may be implemented in the form of any system including a processor and memory that is capable of performing the functions described within this specification.

Memory elements 62 may include one or more physical memory devices such as, for example, local memory 64 and one or more bulk storage devices 65. Local memory may refer to random access memory or other non-persistent memory device(s) generally used during actual execution of the program code. A bulk storage device 65 may be implemented as a hard drive or other persistent data storage device. The data processing system 60 may also include one or more cache memories (not shown) that provide temporary storage of at least some program code in order to reduce the number of times program code must be retrieved from bulk storage device 65 during execution.

Input/output (I/O) devices depicted as input device 66 and output device 67 optionally can be coupled to the data processing system 60. Examples of input devices may include, but are not limited to, for example, a keyboard, a pointing device such as a mouse, a touchscreen, or the like. Examples of output device may include, but are not limited to, for example, a monitor or display, speakers, or the like. Input device 66 and/or output device 67 may be coupled to data processing system 60 either directly or through intervening I/O controllers. A network adapter 68 may also be coupled to data processing system 60 to enable it to become coupled to other systems, computer systems, remote network devices, and/or remote storage devices through intervening private or public networks. Multiple network adapters, or NICs (Network Interface Cards), or vNICs (virtual Network Interface Cards) may be used to couple multiple networks to the device. All networks may have separate interfaces, which may include NICs. In some embodiments, NICs are not shared between networks to increase security.

The network adapter 68 may include a data receiver for receiving data that is transmitted by said systems, devices and/or networks to said data processing system 60 and a data transmitter for transmitting data to said systems, devices and/or networks. Modems, cable modems, and Ethernet cards are examples of different types of network adapters that may be used with data processing system 60.

As pictured in FIG. 6, memory elements 62 may store an application 69. It should be appreciated that data processing system 60 may further execute an operating system (not shown) that can facilitate execution of the application. Applications implemented in the form of executable program code can be executed by data processing system 60, for example, by processor 61. Responsive to executing the application 69, the data processing system 60 may be configured to perform one or more operation as disclosed in the present application in further detail. The system may include a server, a virtual server and/or a so-called container. An example of a container is Docker (www.docker.com).

In one aspect, for example, data processing system 60 may represent a multipoint transmission control system MTC or a user device UE. In that case, application 69 may represent a client application which, when executed, configures data processing system 60 to perform the various functions described herein with reference to an MTC or a user equipment. Examples of an MTC include a base station of a telecommunications network providing cellular wireless access, for example a NodeB or an eNB. The user equipment can include, but is not limited to, a personal computer, a portable computer, a mobile phone, or the like.

In another aspect, data processing system 60 may represent a transmission node TN as described herein, in which case application 69, when executed, may configure data processing system 60 to perform operations as described in the present disclosure.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The abstract should not be used to limit the scope of the claims, and neither should reference numbers in the claims.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiments were chosen and described in order to best explain the principles of the invention and the practical application, and to enable others of ordinary skill in the art to understand the invention for various embodiments with various modifications as are suited to the particular use contemplated.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (for example, read-only memory devices within a computer such as CD-ROM disks readable by a CD-ROM drive, ROM chips or any type of solid-state non-volatile semiconductor memory) on which information is permanently stored; and (ii) writable storage media (for example, flash memory, floppy disks within a diskette drive or hard-disk drive or any type of solid-state random-access semiconductor memory) on which alterable information is stored.

It will therefore be understood by those skilled in the art that the present invention is not limited to the embodiments mentioned above and that many additions and modifications are possible without departing from the scope of the invention as defined in the appending claims.

## Claims

1. A method of transmitting data (D) from a first device (1) to a second device (2), the method comprising:
- producing, at the first device (1), by using the data (D), at least a first data part (DP1) and a second data part (DP2),
- transmitting the first data part from the first device (1) to the second device (2) via a first intermediate device (3), a first network (7a) and a second intermediate device (4),
- transmitting the second data part from the first device (1) to the second device (2) via a second network (7b), and
- reproducing, at the second device (2), the data (D) by using the first data part (DP1) and the second data part (DP2),
wherein a first set (S1) of identifiers is associated with the first device (1), a second set (S2) of identifiers is associated with the second device (2), a third set (S3) of identifiers is associated with the first intermediary device (3) and a fourth set (S4) of identifiers is associated with the second intermediary device (4), and
wherein transmitting the first data part (DP1) from the first device (1) to the second device (2) comprises:
- the first device (1) transmitting the first data part with a first identifier (ID1) of the first set (S1) as origin identifier and a first identifier (ID3a) of the third set (S3) as destination identifier,
- the first intermediate device (3) forwarding the first data part with a second identifier (ID3b) of the third set (S3) as origin identifier and a first identifier (ID4a) of the fourth set (S4) as destination identifier,
- the second intermediate device (4) forwarding the first data part with a second identifier (ID4b) of the fourth set (S4) as origin identifier and a first identifier (ID2) of the second set as destination identifier, and
- the second device (2) receiving the first data part with the second identifier (ID4b) of the fourth set (S4) as origin identifier and the first identifier (ID2) of the second set (S2) as destination identifier.

2. The method according to claim 1, wherein transmitting the second data part (DP2) from the first device (1) to the second device (2) comprises transmitting the second data part (DP2) via a third intermediate device (5) through the second network (7b) to a fourth intermediate device (6),
wherein a fifth set (S5) of identifiers is associated with the third intermediary device (5) and a sixth set (S6) of identifiers is associated with the fourth intermediary device (6), and
wherein transmitting the second data part (DP2) from the first device (1) to the second device (2) comprises:
- the first device (1) transmitting the second data part with a first identifier (ID1) of the first set (S1) as origin identifier and a first identifier (ID5a) of the fifth set (S5) as destination identifier,
- the third intermediate device (5) forwarding the second data part with a second identifier (ID5b) of the fifth set (S5) as origin identifier and a first identifier (ID6a) of the sixth set (S6) as destination identifier,
- the fourth intermediate device (6) forwarding the second data part with a second identifier (ID6b) of the sixth set (S6) as origin identifier and a first identifier (ID2) of the second set as destination identifier, and
- the second device (2) receiving the second data part with the second identifier (ID6b) of the sixth set (S6) as origin identifier and the first identifier (ID2) of the second set (S2) as destination identifier.

3. The method according to claim 2, wherein the first network and a second network are constituted by a single network (7).

4. The method according to claim 1 or 2, wherein the first network (7a) and the second network (7b) operate according to different protocols.

5. The method according to any of the preceding claims, further comprising assigning the identifiers (ID1, ID2, ID3a, ...) to the devices (1, 2, 3, ...) prior to transmitting the data parts.

6. The method according to any of the preceding claims, wherein the data (D) comprise a data stream.

7. The method according to any of the preceding claims, wherein producing, by using the data (D), at least a first data part (DP1) and a second data part (DP2) comprises at least one of:
- allocating alternate groups of bits to the first data part and the second data part,
- determining a frequency spectrum of the data and allocating the real part and the imaginary part of the spectrum to the first data part and the second data part respectively,
- decorrelating the first data part and the second data part, and/or
- encrypting the data and/or the first data part and/or the second data part.

8. A method for a first device (1) to transmit data (D) to a second device (2), the method comprising:
- producing, by using the data (D), at least a first data part (DP1) and a second data part (DP2), which data parts are distinct,
- transmitting the first data part via a first route comprising a first intermediate device (3), and
- transmitting the second data part via a second route,
wherein the first data part (DP1) and the second data part (DP2) are adapted to allow the second device (2) to reproduce the data (D),
wherein a first set (S1) of identifiers is associated with the first device (1), a second set (S2) of identifiers is associated with the second device (2), and a third set (S3) of identifiers is associated with the first intermediary device (3), and
wherein the first device (1) transmits the first data part with a first identifier (ID1) of the first set (S1) as origin identifier and a first identifier (ID3a) of the third set (S3) as destination identifier.

9. A method for a second device (2) to receive data (D) from a first device (1), the method comprising:
- receiving a first data part (DP1) via a first route comprising a second intermediate device (4),
- receiving a second data part (DP2) via a second route, and
- reproducing, at the second device (2), the data (D) by using the first data part (DP1) and the second data part (DP2),
wherein the first data part (DP1) and the second data part (DP2) are adapted to allow the second device (2) to reproduce the data (D),
wherein a first set (S1) of identifiers is associated with the first device (1), a second set (S2) of identifiers is associated with the second device (2), and a fourth set (S4) of identifiers is associated with the second intermediary device (4), and
wherein the second device (2) receives the first data part with a first identifier (ID1) of the fourth set (S4) as origin identifier and a first identifier (ID2) of the second set (S2) as destination identifier.

10. A computer program product (50) comprising instructions allowing a processor to carry out the method according to any of the preceding claims.

11. A first device (1) adapted for transmitting data to a second device (2), the device comprising:
- a partitioning unit (10) adapted for producing, from the data (D), at least a first data part (DP1) and a second data part (DP2),
- a first transmission unit (11) adapted for transmitting the first data part (DP1) to a first network (7a) via a first intermediate device (3), and
- a second transmission unit (12) adapted for transmitting the second data part (DP2) to a second network (7b),
wherein the partitioning unit (10) is adapted for producing distinct data parts (DP1, DP2, ...) which allow the second device (2) to reproduce the data.

12. The device according to claim 11, further comprising at least one encryption unit (13; 14) adapted to encrypt the first data part (DP1) and/or the second data part (DP2).

13. A device according to claim 11 or 12, further adapted for receiving data (D) as data parts (DP1, DP2) from another first device, the device further comprising:
- a first receiving unit (21) adapted for receiving a first data part (DP1) via a first network (7a),
- a second receiving unit (22) adapted for receiving a second data part (DP2) via a second network (7b), and
- a reproduction unit (20) adapted for reproducing the data (D) from the first data part (DP1) and the second data part (DP2).

14. A second device (2) adapted for receiving data (D) as data parts (DP1, DP2) from a first device (1), the device comprising:
- a first receiving unit (21) adapted for receiving a first data part (DP1) via a first network (7a),
- a second receiving unit (22) adapted for receiving a second data part (DP2) via a second network (7b), and
- a reproduction unit (20) adapted for reproducing the data (D) from the first data part (DP1) and the second data part (DP2).

15. A system (10) adapted for transmitting data (D), the system comprising:
- a first network (7a) and a second network (7b),
- a first device (1) adapted to transmit the data (D),
- a second device (2) adapted to receive the data (D),
- a first intermediate device (3) adapted to forward data, and
- a second intermediate device (4) adapted to forward data,
wherein the first device (1) is adapted for
o producing, by using the data (D), at least a first data part (DP1) and a second data part (DP2), which data parts are distinct,
o transmitting the first data part from the first device (1) to the second device (2) via a first intermediate device (3), a first network (7a) and a second intermediate device (4), and
o transmitting the second data part from the first device (1) to the second device (2) via a second network (7b),
wherein the second device (2) is adapted for reproducing the data (D) by using the first data part (DP1) and the second data part (DP2),
wherein a first set (S1) of identifiers is associated with the first device (1), a second set (S2) of identifiers is associated with the second device (2), a third set (S3) of identifiers is associated with the first intermediary device (3) and a fourth set (S4) of identifiers is associated with the second intermediary device (4), and wherein:
- the first device (1) is adapted for transmitting the first data part with a first identifier (ID1) of the first set (S1) as origin identifier and a first identifier (ID3a) of the third set (S3) as destination identifier,
- the first intermediate device (3) is adapted for forwarding the first data part with a second identifier (ID3b) of the third set (S3) as origin identifier and a first identifier (ID4a) of the fourth set (S4) as destination identifier,
- the second intermediate device (4) is adapted for forwarding the first data part with a second identifier (ID4b) of the fourth set (S4) as origin identifier and a first identifier (ID2) of the second set as destination identifier, and
- the second device (2) is adapted for receiving the first data part with the second identifier (ID4b) of the fourth set (S4) as origin identifier and the first identifier (ID2) of the second set (S2) as destination identifier.
